(19) Europäisches Patentamt

European Patent Office

Office européen des brevets

(11) **EP 1 098 706 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.7: **B01J 39/00**, B01J 39/08, B01J 39/04

(21) Anmeldenummer: **99930912.3**

(22) Anmeldetag: **08.07.1999**

(86) Internationale Anmeldenummer:
**PCT/AT1999/000174**

(87) Internationale Veröffentlichungsnummer:
**WO 2000/002658 (20.01.2000 Gazette 2000/03)**

(54) **VERFAHREN ZUM ÜBERFÜHREN EINES VORZUGSWEISE SCHWACHSAUREN IONENAUSTAUSCHERMATERIALS VON DER H-FORM IN DIE Ca-FORM**

METHOD FOR CONVERTING A PREFERABLY WEAK ACID ION-EXCHANGE MATERIAL FROM THE H FORM INTO THE Ca FORM

PROCEDE POUR FAIRE PASSER UN MATERIAU ECHANGEUR D'IONS, DE PREFERENCE FAIBLEMENT ACIDE, DE LA FORME H A LA FORME Ca

(84) Benannte Vertragsstaaten:
**AT BE CH CY DE DK ES FI FR GB GR IE IT LI LU MC NL PT SE**
Benannte Erstreckungsstaaten:
**RO SI**

(30) Priorität: **08.07.1998 AT 117898**

(43) Veröffentlichungstag der Anmeldung:
**16.05.2001 Patentblatt 2001/20**

(73) Patentinhaber: **WATERCRYST chemiefreie Wasserbehandlung GmbH 6175 Kematen in Tirol (AT)**

(72) Erfinder:
• **Leiter, Klaus, Dr. 6176 Völs (AT)**
• **Walder, Gerhard, Dr. 6170 Zirl (AT)**

(74) Vertreter: **Torggler, Paul Norbert, Dr. et al Patentanwälte Torggler und Hofinger Wilhelm-Greil-Strasse 16 Postfach 556 6021 Innsbruck (AT)**

(56) Entgegenhaltungen:
• **DATABASE WPI Section Ch, Week 197907 Derwent Publications Ltd., London, GB; Class A91, AN 1979-13503B XP002118817 & JP 54 004889 A (UNITIKA LTD), 13. Januar 1979 (1979-01-13)**
• **CHEMICAL ABSTRACTS, vol. 84, no. 14, 5. April 1976 (1976-04-05) Columbus, Ohio, US; abstract no. 95327, TSUDA, SEIICHI: "Heavy metal removal from waste water by ion exchanger" XP002118816 & JP 50 139079 A (EBARA-INFILCO CO., LTD., JAPAN) 6. November 1975 (1975-11-06)**
• **DATABASE WPI Section Ch, Week 199438 Derwent Publications Ltd., London, GB; Class J01, AN 1994-309001 XP002118840 ANONYMOUS: "Converting hydrogen ion forms of cation exchange resins to the calcium form - by treating with calcium chloride soln." & RESEARCH DISCLOSURE, Bd. 365, Nr. 046, 10. September 1994 (1994-09-10), Emsworth, GB**

**Beschreibung**

Die Erfindung betrifft ein Verfahren und eine Vorrichtung zum Überführen eines vorzugsweise schwachsauren Ionenaustauschermaterials von der H-Form in die Ca-Form.

Schwachsaure Ionenaustauschermaterialien in der Ca-Form sind in der Lage auf katalytischem Wege Kalk aus kalkhaltigen Wässern zu fällen. Damit dieser katalytische Effekt deutlich zum Tragen kommt, ist es notwendig, das Ionenaustauschermaterial möglichst vollständig in die Ca-Form zu überführen: Eine Restbeladung des Materials mit H$^+$-Ionen (H-Form) würde im Einsatz im Wasser infolge stattfindenden Ionenaustausches den pH-Wert des Wassers absenken und auf diese Weise der katalytischen Wirkung der mit Ca$^{2+}$-Ionen beladenen funktionellen Gruppen entgegenwirken.

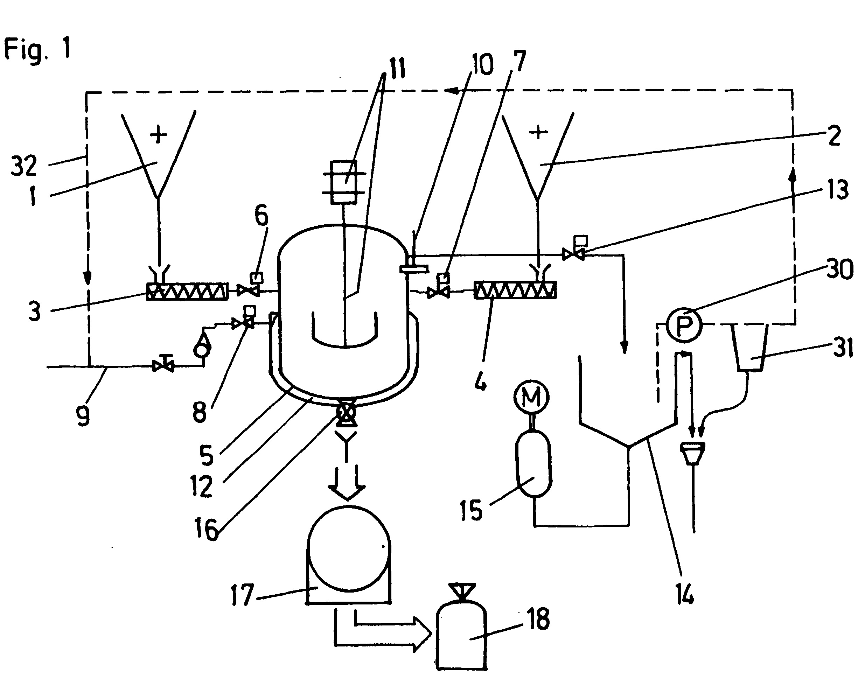

Um dies zu erreichen, schlägt die Erfindung in einer ersten Variante vor, daß das Ionenaustauschermaterial mit in einer wässrigen, vorzugsweise gesättigten Calziumhydroxid Ca(OH)$_2$-Lösung in Kontakt gebracht wird. Die entsprechende Vorrichtung ist gekennzeichnet durch durch einen Konvertierungsbehälter mit einem Wasserzulauf, einer Einfüllöffnung für das Ionenaustauschermaterial und einer Einfüllöffnung für Calziumhydroxid Ca(OH)$_2$ oder Calziumoxid CaO, sowie einer Entnahmeöffnung (Fig. 1).

Übliche im Handel erhältliche Ionenaustauschermaterialien in der H-Form (z. B. Lewatit S 8528 der Fa. Bayer AG, Leverkusen, Deutschland), haben die Eigenschaft, daß ein Ionenaustausch mit anderen Kationen erst ab einem bestimmten pH-Wert möglich wird; diese pH-Wertschwelle liegt je nach Ionenaustauschermaterial bei pH-Werten zwischen 3 und 6 (abhängig auch vom jeweiligen Gegenion und dessen Konzentration). Eine direkte Konvertierung der Materialien, beispielsweise in einer CaCl$_2$-Lösung (Calziumchlorid-Lösung) ist aus diesem Grund eine Grenze gesetzt: Der Ionenaustausch stoppt, sobald die pH-Wertschwelle unterschritten wird. Es sind also Maßnahmen notwendig, die den Ionenaustausch bei hohen pH-Werten ermöglichen. Bei starksauren Ionenaustauschern ist der Ionenaustausch weniger empfindlich auf pH-Werte.

Das Dokument DERWENT Publications Ltd., London 1994, XP2118840 beschreibt ein Verfahren zum Überführen eines starksauren Harzes von der H$^+$-Form in die Ca$^{++}$-Form in einer CaCl$_2$-Lösung durch Zugabe von CaO oder Ca(OH)$_2$.

Der Ionenaustausch kommt jedoch auch bei diesen Harzen bei sehr niedrigen pH-Werten (<1) praktisch zum Stillstand.

Ca(OH)$_2$ hat in Wasser eine relativ geringe Löslichkeit: Bei T=20°C beträgt diese 1.7 g/l bzw. 23 mmol/l; der pH-Wert beträgt ca. 12.3 pH-Einheiten. Dies stellt zunächst für den Fachmann ein Hindernis dar, Ca(OH)$_2$ als geeignetes Konvertierungsmittel anzusehen. Steht aber beispielsweise eine wässrige Lösung mit einem ausreichenden Bodensatz an Ca(OH)$_2$ in Kontakt, so geht ein Teil dieses Bodensatzes in Lösung, immer wenn durch irgendwelche Vorgänge in der Lösung Ca$^{2+}$-Ionen bzw. OH$^-$-Ionen verbraucht werden und das Löslichkeitsprodukt unterschritten wird. Dieses Nachlösen von Ca$^{2+}$ - bzw. OH$^-$Ionen geht besonders schnell, wenn durch Umrühren der Bodensatz aufgewirbelt wird und sich Ca(OH)$_2$-Kolloide bilden.

Gibt man in eine Suspension letzterer Art ein schwach- oder starksaures Ionenaustauschermaterial in der H$^+$-Form, so findet sofort ein Ionenaustausch H$^+$-Ionen vom Ionenaustauscher gegen Ca$^{2+}$-Ionen aus der Lösung statt. Die in die Lösung übergehenden H$^+$-Ionen werden durch die in der Lösung vorhandenen OH$^-$-Ionen sofort neutralisiert (H$^+$ + OH$^+$ → H$_2$O). Die nun in der Lösung fehlenden Ca$^{2+}$-Ionen und OH$^-$-Ionen werden durch Nachlösen aus dem Bodensatz bzw. der Ca(OH)$_2$-Suspension ersetzt.

Die Verwendung einer gesättigten Ca(OH)$_2$-Lösung hat folgende Vorteile:

Bei Ca(OH)$_2$ handelt es sich um eine billige Chemikalie, die ohne besondere Sicherheitseinrichtungen einfach handhabbar ist.

Für die Konvertierung ist nur so viel Ca(OH)$_2$ notwendig, als es die Stöchiometrie erfordert: Bei der Konvertierung von dem schwachsauren Ionenaustauscher Lewatit S 8528 der Fa. Bayer mit einer Kapazität von 4.3 val/l erlaubt eine Vorlage von 2.37 Mol Ca(OH)$_2$ pro Liter Harz (10%-iger Überschuß) eine einwandfreie Konvertierung des Harzes.

Alternativ zu Ca(OH)$_2$ als Grundchemikalie läßt sich auch Calziumoxid CaO verwenden: CaO reagiert nämlich mit Wasser zu Ca(OH)$_2$:

$$CaO + H_2O \rightarrow Ca(OH)_2$$

Nach der Konvertierung wird das konvertierte Ionenaustauschermaterial solange mit Wasser ausgespült, bis im ablaufenden Wasser der pH-Wert 9 deutlich unterschritten wird.

Die Konvertierungszeit und die Ausspülzeit lassen sich deutlich reduzieren durch Anheben der Temperatur, vorzugsweise auf über 40°C (insbesondere auf T=50°C)

Eine alternative Möglichkeit der Konvertierung eines schwachsaueren Ionenaustauschermaterials in die Ca-Form bietet der Umweg über die Na-Form:

Ein schwachsaures Ionenaustauschermaterial in der H-Form läßt sich auf einfache Weise mit konzentrierter NaOH - Lauge (Natronlauge) in die Na-Form überführen: Beispielsweise gelingt es, das schwachsaure Ionenaustauscherharz Lewatit S 8528 der Fa. Bayer durch im Kreislaufpumpen einer der Harzbettmenge äquivalenten Menge einer 5-6 molaren NaOH-Lauge in einer Tauschersäule zu konvertieren.

Nach Auswaschen des Harzes mit Wasser läßt sich nun das in der Na-Form vorliegende Harz beispielsweise durch Durchspülen der dreifachen Harzbettmenge einer 4 molaren (Calziumchlorid) $CaCl_2$-Lösung in einer Tauschersäule (Konvertierungsbehälter) in die Ca-Form überführen.

Die Erfindung wird nun anhand von zwei Beispielen beschrieben.

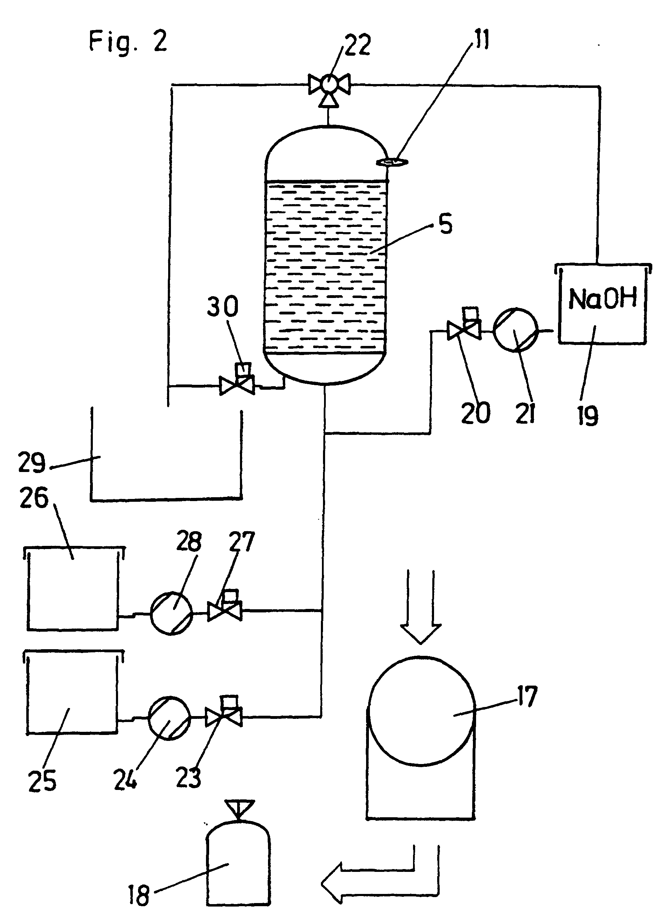

Die Fig. 1 und 2 zeigen schematische Ausführungsformen von Vorrichtungen zur Durchführung von zwei Varianten der Erfindung.

Bei der Konvertierung mittels Calziumhydroxid sind folgende Einzelschritte vorgesehen (Fig. 1):

Das Ionenaustauschermaterial und eine genau abgestimmte Menge $Ca(OH)_2$ werden von den jeweiligen Vorratsbehältern 1, 2 mittels Förderschnecken 3, 4 in den Konvertierungsbehälter 5 befördert (Ventil 6 und Ventil 7 sind während der Beladung geöffnet). Durch Öffnen von Ventil 8 wird der Behälter bis zur Höhe des Überlaufes mit Wasser aus dem Zulauf 9 aufgefüllt (Füttstandschatter 10). Anschließend schließen alle Ventile und das Rührwerk 11 beginnt zu arbeiten; will man die Konvertierung bei höheren Temperaturen durchführen, beginnt man gleichzeitig mit dem Hochheizen auf die Solltemperatur mittels einer Heizeinrichtung 12. Der eingebaute Temperaturfühler kontrolliert das Temperaturprofil; die pH- und Leitfähigkeitssensoren 10 informieren über den Beladungsvorgang.

Ist der Beladungsvorgang abgeschlossen, beginnt das Spülen des Harzes (Ionenaustauschermaterials). Dazu wird das Überlaufventil 13 und das Wasserzufuhrventil 8 geöffnet. Der Rührer 11 bleibt während des Spülens angeschaltet. Um zu verhindern, daß das Harz aus dem Behälter 5 ausgespült wird, ist am Eintritt der Übenaufleitung ein feines Gitter integriert, das das Harz zurückhält. Um die am Beginn der Spülung im Auslaufwasser vorhandenen $Ca(OH)_2$-Kolloide aufzufangen, ist es zweckmäßig, zunächst das auslaufende Spülwasser durch ein Abklärbecken 14 zu leiten. Die absedimentierten Kolloide können entweder vom Boden des Abklärbeckens abgesaugt werden oder man wandelt diese durch Einblasen von Luft-$CO_2$ (Kompressor 15) in $CaCO_3$-Kristalle um. Zurück bleibt im letzteren Fall ein feiner Kalkschlamm, der ebenfalls abgesaugt werden kann. Gegebenenfalls muß der pH-Wert des Ablaufwassers durch $CO_2$ oder Säurezugabe zusätzlich abgesenkt werden (auf pH-Wert < 9), um das Spülwasser in die Kanalisation einleiten zu können. Um den Spülwasserverbrauch zu minimieren und aus ökologischen Gründen (Ökobitanz), ist es günstig, das abgeklärte und in seinem pH-Wert abgesenkte Ablaufwasser als Spülwasser weiterzuverwenden und in den Konvertierungstank mittels einer Pumpe zurückzupumpen. Anstelle eines Abklärbeckens empfiehlt sich im Kreislaufbetrieb die Verwendung eines Hydrozyklons, der $Ca(OH)_2$-Kolloide und Kalkkristalle effizient abscheidet.

Der Spülvorgang wird ebenfalls von der pH-Wertsonde und der Leifähigkeitssonde überwacht. Fällt im Konvertierungstank der pH-Wert deutlich unter den Wert 9, so ist das Ausspülen der $Ca(OH)_2$-Kolloide abgeschlossen und die Wasserzufuhr kann gestoppt werden (Schließen des Ventils 8).

Es kann auch vorgesehen sein, das Spülwasser über eine Pumpe 30 und einen Hydrozyklon 31 über eine Rückführleitung 32 zum Zulauf zurückzuführen.

Um das Harz für seinen Einsatz bei hohen Temperaturen vorzukonditionieren und gleichzeitig um das Harz zu desinfizieren, wird das Wasser im Tank anschließend auf ca. 80°C erwärmt und ca. 1 Stunde unter Rühren auf dieser Temperatur belassen.

Nach Ablauf dieser Zeit wird das Harz durch Öffnen von Ventil 8 und 13 gespült.

Anschließend wird die Entnahmeschleuse 16 geöffnet und das konvertierte Harz in einen Behälter mit Siebboden abgelassen.

Das konvertierte Harz läßt man abtropfen und wird anschließend in einem Trockenofen 17 getrocknet (bei T=90°C über ca. 12 Stunden).

Das getrocknete Harz wird dem Ofen entnommen und steril verpackt (Packungen 18).

Ein Prototyp dieser Konvertierungsanlage hat beispielsweise folgende Daten:

| | |
|---|---|
| Konvertierungstank: | 200 l Volumen |
| Maximale eingesetzte Harzmenge: | 80 l |
| $Ca(OH)_2$ Menge bei 80 l Lewatit S 8528 (10 % Überschuß) | 14 kg |
| Wassermenge während der Konvertierung | ca. 120 l |
| Spülwassermenge | 2 m$^3$ |

Fig. 2 zeigt schematisch den Aufbau einer Anlage, bei der die Konvertierung auf dem Umweg über die Na-Form von der H-Form in die Ca-Form erfolgt:

Im Mittelpunkt einer solchen Analge steht eine Ionenaustauschersäule (Konvertierungsbehälter 5), die mit dem zu konvertierenden Harz zu füllen ist (z. b. über eine nicht dargestellte Einfüllöffnung). Im Boden der Säule 5 sind spezielle Düsen eingearbeitet, die die Aufgabe haben, das Konvertierungsmittel entsprechend zu verteilen. Der Beladungsvorgang erfolgt im Festbett, die Steiggeschwindigkeit der Konvertierungsmittel soll einen Wert von 5 m/h nicht übersteigen, um eine gleichmäßige Beladung der Harzfüllung zu ermöglichen. lediglich beim Spülen des Harzes (Ionenaustauschers) mit Wasser, fährt man eine höhere Durchflußgeschwindigkeit. Um beim Spülen ein Ausspülen des Harzes zu verhindern, ist im Tank ein oberer Düsenboden integriert.

Folgende Einzelschritt hat dieses Verfahren:

Einfüllen des Harzes in die Säule 5.

Vorbereiten der für die Konvertierung in die Na-Form notwendigen NaOH-Lauge (4-6 molar) im Behälter 19. Durch Öffnen des Ventils 20 und Anschalten der Pumpe 21 wird die Natron-Lauge im Kreislauf über die Säule geführt (3-Wege-Ventil 22 ist in Richtung NaOH-Behälter 19 geöffnet). Über Messung der Leitfähigkeit und des pH-Wertes wird der Beladungsvorgang überwacht (Sensoren 11).

Ist die Konvertierung in die Na-Form abgeschlossen, wird das Harz durch Öffnen von Ventil 23 und Anschalten der Pumpe 24 mit entmineralisiertem Wasser aus dem Behälter 25 gespült (ca. 3-5-faches Harzvolumen, 3-Wege-Ventil 22 ist in Richtung NaOH-Behälter geöffnet). Die abgelassene Natronlauge und das Spülwasser werden im NaOH-Behälter 19 aufgefangen; diese Sole wird bis zum Erreichen der notwendigen Konzentration eingedampft bzw. durch Zugabe von NaOh-Plätzchen aufkonzentriert und kann für weitere Beladungsvorgänge weiterverwendet werden.

Dann wird eine entsprechende Menge 3-4 molare $CaCl_2$-Lösung angesetzt (Behälter 26) und durch Öffnen von Ventil 27 und Anschalten der Pumpe 28 langsam durch die Säule 5 gedrückt (Steiggeschwindigkeit ca. 1-5 m/h). Über Leitfähigkeit und pH-Wertmessung wird der Fortgang der Umladung überwacht. Das 3-Wege-Ventil 22 ist in Richtung Auffang-Behälter 29 geöffnet.

Ist die Beladung abgeschlossen wird die Flüssigkeit in die Säule durch Öffnen des Ventils 30 abgelassen.

Anschließend wird das Harz mit entmineralistiertem Wasser gespült (3-Wege-Ventil 22 in Richtung Auffang-Behälter 29 geöffnet), aus der Säule entnommen, in einem Drehofen 17 getrocknet (bei T=90°C über 12 h) und steril verpackt.

Beispielhafte Abmessung einer solchen Ionenaustauschersäule, die für Konvertierung von maximal 80 l Harz vorgesehen ist:

| | |
|---|---|
| Innendurchmesser: | $D_i$=40 cm |
| Höhe: | 1 m |
| NaOH-Menge (für 80 l Harz Lewatit S 8528) | 240 l 4-6 molarer NaOH |
| $CaCl_2$-Menge (für 80 l Harz Lewatit S 8528) | 240 l 3-4 molarer $CaCl_2$ |
| Spüldestillat | ca. 1 m$^3$ |

Letzteres Verfahren ist im Vergleich zum Verfahren nach Fig. 1 technisch und resourcenmäßig aufwendiger, liefert aber ebenfalls ein einwandfreies Ergebnis, nämlich einen praktisch vollständig in der Ca-Form vorliegenden Ionenaustauscher.

**Patentansprüche**

1. Verfahren zum Überführen eines vorzugsweise schwachsauren Ionenaustauschermaterials von der H-Form in die Ca-Form, **dadurch gekennzeichnet, daß** das Ionenaustauschermaterial mit einer wässrigen, gesättigten Calziumhydroxid $Ca(OH)_2$-Lösung in Kontakt gebracht wird, wobei die Calziumhydroxid-Lösung mit noch ungelöstem Calziumhydroxid in Kontakt steht.

2. Verfahren nach Anspruch 1, **dadurch gekennzeichnet, daß** das Ionenaustauschermaterial in einen Behälter für die Calziumhydroxid-Lösung eingefüllt wird, wobei das ungelöste Calziumhydroxid als Bodensatz bereitgestellt wird.

3. Verfahren nach Anspruch 1 oder 2, **dadurch gekennzeichnet, daß** die Calziumhydroxid-Lösung während des Kontaktes mit dem Ionenaustauschermaterial - vorzugsweise mittels eines Rührers - in Bewegung gehalten wird.

4. Verfahren nach einem der, Ansprüche 1 bis 3, **dadurch gekennzeichnet, daß** die Calziumhydroxid-Lösung auf eine erhöhte Temperatur, vorzugsweise über 40°C gebracht wird.

# EP 1 098 706 B1

**5.** Verfahren nach einem der Ansprüche 1 bis 4, **dadurch gekennzeichnet, daß** das konvertierte lonenaustauschermaterial - vorzugsweise in einem Rotationstrockenofen oder Wirbelschichttrockenofen - getrocknet wird.

**6.** Verfahren nach einem der Ansprüche 1 bis 5, **dadurch gekennzeichnet, daß** das lonenaustauschermaterial nach der Konvertierung mit Spülwasser gespült wird und das ablaufende Spülwasser durch Einblasen von Luft oder $CO_2$ und/oder Säurezugabe in seinem pH-Wert abgesenkt wird, sodaß dieses in die Kanalisation eingeleitet werden kann, oder das in seinem pH-Wert abgesenkte Wasser wird nach Absedimentation von $Ca(OH)_2$ oder Kalkkolloiden in einem Abklärbecken oder deren Abtrennung in einem Hydrozyklon als Spülwasser wiederverwendet und in den Konvertierungstank zum Spülen zurückgepumpt.

**7.** Verwendung einer Vorrichtung enthaltend einen Konvertierungsbehälter (5), der einen Wasserzulauf (9), eine Einfüllöffnung für das lonenaustauschermaterial und eine Einfüllöffnung für Calziumhydroxid $Ca(OH)_2$ oder Calziumoxid CaO, sowie eine Entnahmeöffnung aufweist, zum Überführen eines vorzugsweise schwachsauren lonenaustauschermaterials von der H-Form in die Ca-Form gemäß dem Verfahren nach einem der Ansprüche 1 bis 6.

**8.** Verwendung nach Anspruch 7, **dadurch gekennzeichnet, daß** die Vorrichtung einen Vorratsbehälter (2) für das rieselfähige lonenaustauschermaterial und einen Vorratsbehälter (1) für Ca(OH)2 oder CaO aufweist, wobei zwischen Vorratsbehältern (1, 2) und den entsprechenden Einfüllöffnungen am Konvertierungsbehälter (5) jeweils Dosiereinrichtungen, vorzugsweise Förderschnecken (3, 4) angeordnet sind.

**9.** Verwendung nach Anspruch 7 oder 8, **gekennzeichnet durch** ein Rührwerk (11) im Konvertierungsbehälter.

**10.** Verwendung nach einem der Ansprüche 7 bis 9, **gekennzeichnet durch** eine Heizeinrichtung (12) im bzw. am Konvertierungsbehälter.

## Claims

**1.** Method for converting an, preferably weakly acid, ion exchanger material from the H-form into the Ca-form, **characterized in that** the ion exchanger material is brought into contact with an aqueous, saturated calcium hydroxide $Ca(OH)_2$ solution, wherein the calcium hydroxide solution is in contact with still-undissolved calcium hydroxide.

**2.** Method according to claim 1, **characterized in that** the ion exchanger material is poured into a tank for the calcium hydroxide solution, wherein the undissolved calcium hydroxide is provided as sedimentary deposit.

**3.** Method according to claim 1 or 2, **characterized in that** the calcium hydroxide solution is kept in motion - preferably with the help of a stirrer - during the contact with the ion exchanger material.

**4.** Method according to one of the claims 1 to 3, **characterized in that** the calcium hydroxide solution is raised to a higher temperature, preferably above 40°C.

**5.** Method according to one of the claims 1 to 4, **characterized in that** the converted ion exchanger material is dried, preferably in a rotary drying oven or fluid-bed drying oven.

**6.** Method according to one of the claims 1 to 5, **characterized in that** the ion exchanger material is rinsed with rinsing water after the conversion and the pH-value of the discharging rinsing water is reduced by blowing in air or $CO_2$ and/or adding acid, so that it can be introduced into the drains, or the water whose pH-value has been reduced is reused as rinsing water after sedimentation of $Ca(OH)_2$ or lime colloids in a treatment tank or their separation in a hydrocyclone and pumped back into the conversion tank for rinsing.

**7.** Use of a device comprising a conversion tank with a water inlet, a filling opening for the ion exchanger material and a filling opening for calcium hydroxide $Ca(OH)_2$ or calcium oxide CaO, plus an extraction opening, for converting a, preferably weakly acid, ion exchanger material from the H-form into the Ca-Form according to one of the claims 1 to 6.

**8.** Use according to claim 7, **characterized in that** the device comprises a storage tank (2) for the flowable ion exchanger material and a storage tank (1) for $Ca(OH)_2$ or CaO, wherein dosing devices, preferably conveying screws (3, 4), are arranged between the storage tanks and the corresponding filling openings at the conversion tank (5) in each case.

**9.** Use according to claim 7 or 8, **characterized by** a stirrer (11) in the conversion tank.

**10.** Use according to one of the claims 7 to 9, **characterized by** a heater (12) in or at the conversion tank.


**Revendications**

**1.** Procédé pour convertir de préférence des résines échangeuses d'ions avec des propriétés acides faibles, de la forme H sous la forme Ca, **caractérisé en ce que** la résine échangeuse d'ions est mise en contact avec une solution aqueuse saturée d'hydroxyde de calcium $Ca(OH)_2$, ladite solution d'hydroxyde de calcium se trouvant en contact avec l'hydroxyde de calcium, non encore dissous.

**2.** Procédé selon la revendication 1, **caractérisé en ce que** la résine échangeuse d'ions est versée dans un récipient contenant la solution d'hydroxyde de calcium non-dissous est contenu sous forme de précipité.

**3.** Procédé selon la revendication 1 ou 2, **caractérisé en ce que** la solution d'hydroxyde de calcium, pendant le contact avec la résine échangeuse d'ions, est maintenue sous agitation, de préférence, à l'aide d'un agitateur.

**4.** Procédé selon l'une des revendications 1 à 3, **caractérisé en ce que** la solution d'hydroxyde de calcium est amenée à haute température, de préférence, au-dessus de 40°C.

**5.** Procédé selon l'une des revendications 1 à 4, **caractérisé en ce que** la résine échangeuse d'ions convertie est séchée, de préférence dans une étuve tournante ou une étuve à lit fluidisé.

**6.** Procédé selon l'une des revendications 1 à 5, **caractérisé en ce qu'**après la conversion, la résine échangeuse d'ions est lavée avec de l'eau, et le pH de l'eau de lavage circulante est abaissé par insufflation d'air ou de $CO_2$ et/ou addition d'acide, de sorte qu'elle peut être évacuée par une canalisation, ou bien cette eau à pH abaissé, peut être réutilisée, après sédimentation de $Ca(OH)_2$ ou des colloïdes dans un bain de clarification ou après leur séparation dans un appareil du type hydrocyclone comme eau de lavage et être recueillie dans le réacteur de conversion pour reservir d'eau de lavage.

**7.** Utilisation d'un appareil contenant un réacteur de conversion (5) qui comprend un système d'alimentation en eau (9), un orifice de remplissage pour le chargement de la résine échangeuse d'ions et un orifice de remplissage pour le chargement de l'hydroxyde de calcium $Ca(OH)_2$ ou de l'oxyde de calcium CaO, ainsi qu'un orifice de prélèvement pour convertir des résines échangeuse d'ions de préférence avec des propriétés acides faibles de la forme H dans la forme Ca, par le procédé selon l'une quelconque des revendications 1 à 6.

**8.** Procédé selon la revendication 7, **caractérisé en ce que** l'appareil comprend un réservoir (2) pour le stockage de la résine échangeuse d'ions et un réservoir (1) pour le stockage de $Ca(OH)_2$ ou de CaO, et entre les réservoir (1, 2) et les orifices de remplissage appropriés du réacteur de conversion sont placés des systèmes d'alimentation de préférence les deux réservoirs de stockage (1, 2) ayant des systèmes d'alimentation pour le réacteur (5) équipés de doseurs (3, 4), de préférence à vis.

**9.** Procédé selon la revendication 7 ou 8, **caractérisé en ce que** le réacteur chimique de conversion possède un mécanisme d'agitation (11).

**10.** Procédé selon les revendications 7 à 9, **caractérisé en ce que** le réacteur chimique de conversion possède un système de chauffage (12).

Fig. 1

Fig. 2